# EUROPEAN PATENT APPLICATION

(11) **EP 4 773 565 A1**
(43) Date of publication of application: **08.07.2026**
(21) Application number: 25227400.6
(22) Date of filing: 29.12.2025
(51) Int. Cl.: H04L 27/26

(54) **WIRELESS COMMUNICATION METHOD SUPPORTING HIGH DATA RATE WHILE ENSURING RELIABLE LINK QUALITY**

(30) Priority: 30.12.2024 US 202463739714 P; 26.12.2025 US 202519433096
(71) Applicant: MediaTek Inc., Hsinchu City 30078 (TW)
(72) Inventor: HUNG, Ying-Che, 30078 Hsinchu City (TW); TSENG, Ting-Che, 30078 Hsinchu City (TW); ZHANG, Yun-Xuan, 302 Hsinchu County (TW); HSIEH, Ming-Yi, 302 Hsinchu County (TW)
(74) Representative: Hoefer & Partner Patentanwälte mbB

(57) **Abstract**

The present invention provides a wireless communication method, which includes the steps of: establishing a link with another device; and transmitting a Bluetooth packet to the another device, wherein the Bluetooth packet includes a preamble, a control header and a payload, and a bandwidth used for transmitting the preamble and the control header is different from a bandwidth used for transmitting the payload.

## Description

### Field of the Invention

The present invention relates to a wireless communication method.

### Background of the Invention

People are increasingly asking for better sound quality from their wireless headphones and speakers. This demand is focused on High-Resolution (Hi-Res) and lossless audio, which means sound without any loss of quality. To deliver this high-quality sound, the data speed of Bluetooth connections must be much faster. The current standards set by the Bluetooth Special Interest Group (BT SIG, such as the High Data Throughput (HDT) technology, try to improve this speed. However, today's BT SIG HDT systems usually only support a maximum wireless speed (PHY rate) of about 7.5 Mbps (megabits per second).This speed is often too slow for the newest high-quality audio formats. For example, sending simple stereo lossless audio often needs a continuous wireless speed of more than 10 Mbps. Even more demanding is 7.1 channel Hi-Res surround sound, which requires a PHY rate close to or even higher than 15 Mbps. Another key problem comes from the high speed itself. When the PHY rate is pushed very high, the packets are extremely sensitive to interference and noise from the environment. This means that existing high-speed Bluetooth designs often have unstable link quality when they are used in places with a lot of radio interference. Therefore, there is a clear and important need for a new and better way to send Bluetooth packets. This new way must be able to keep a higher PHY rate with reliable link quality.

### Summary of the Invention

Therefore, one object of the present invention is to propose a Bluetooth packet format capable of supporting a high PHY rate while ensuring a reliable link quality, in order to solve the above-mentioned problems.

According to one embodiment of the present invention, a wireless communication method of an electronic device comprises the steps of: establishing a link with another device; and transmitting a Bluetooth packet to the another device, wherein the Bluetooth packet comprises a preamble, a control header and a payload, and a bandwidth used for transmitting the preamble and the control header is different from a bandwidth used for transmitting the payload.

According to one embodiment of the present invention, an electronic device comprising a processor and a wireless communication circuit is disclosed. The wireless communication circuit is configured to: establish a link with another device; and transmit a Bluetooth packet to the another device, wherein the Bluetooth packet comprises a preamble, a control header and a payload, and a bandwidth used for transmitting the preamble and the control header is different from a bandwidth used for transmitting the payload.

### Brief Description of the Drawings

FIG. 1 is a schematic diagram of an electronic device according to an embodiment of the present invention.
FIG. 2 is a schematic diagram of format of a Bluetooth packet according to an embodiment of the present invention.
FIG. 3 is a flowchart of a wireless communication method of the electronic device according to one embodiment of the present invention.

### Detailed Description

Certain terms are used throughout the following description and claims to refer to particular system components. As one skilled in the art will appreciate, manufacturers may refer to a component by different names. This document does not intend to distinguish between components that differ in name but not function. In the following discussion and in the claims, the terms "including" and "comprising" are used in an open-ended fashion, and thus should be interpreted to mean "including, but not limited to ...". The terms "couple" and "couples" are intended to mean either an indirect or a direct electrical connection. Thus, if a first device couples to a second device, that connection may be through a direct electrical connection, or through an indirect electrical connection via other devices and connections.

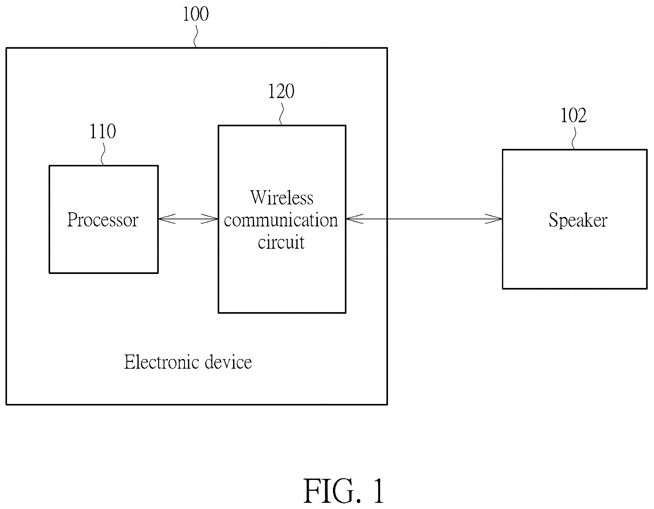

FIG. 1 is a schematic diagram of an electronic device 100 according to an embodiment of the present invention. As shown in FIG. 1, the electronic device 100 comprises a processor 110 and a wireless communication circuit 120. In this embodiment, the electronic device 100 may be a mobile phone, a tablet computer, a laptop computer, or any other electronic device with wireless communication capability. The processor 110 is configured to control the operations of the wireless communication circuit 120 and other elements. The wireless communication circuit 120 comprises at least a Bluetooth physical layer circuit, which is configured to generate and transmit Bluetooth packets to other electronic devices, such as the illustrated speaker 102.

In this embodiment, the wireless communication circuit 120 is compatible with existing Bluetooth specifications, such as the BT SIG HDT specification. As discussed in the background of the present invention, the highest PHY rate currently supported by existing Bluetooth specifications is limited to 7.5 Mbps, which is insufficient for High-Resolution (Hi-Res) or lossless audio applications. Accordingly, this embodiment improves the transmission content of the Bluetooth packet transmitted by the wireless communication circuit 120 to enable the Bluetooth packet to be transmitted using a higher data rate while maintaining good signal quality across various environments, thereby solving the problems mentioned in the prior art.

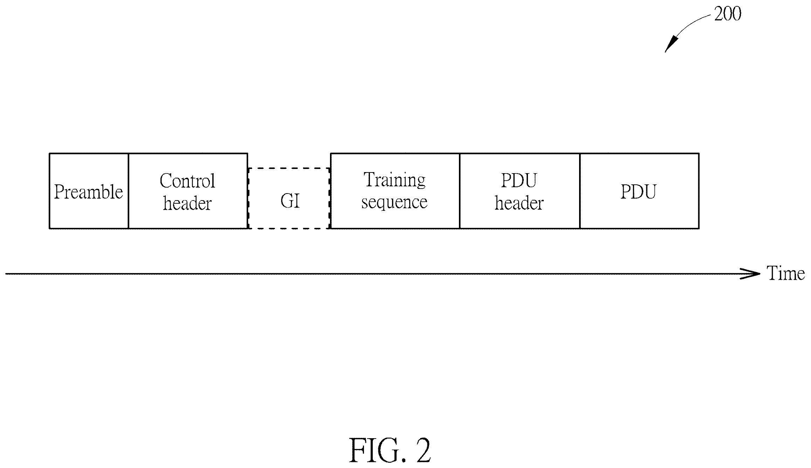

FIG. 2 is a schematic diagram of format of a Bluetooth packet 200 according to an embodiment of the present invention. As shown in FIG. 2, the Bluetooth packet 200 sequentially includes a preamble, a control header, and a payload, wherein the payload comprises a training sequence, a Protocol Data Unit (PDU) header, and a PDU. In this embodiment, a guard interval (GI) is arranged between the control header and the payload.

The preamble includes a pre-defined bit sequence, and its main function is to enable the receiving end (i.e., the speaker 102) to achieve bit synchronization, frequency synchronization, and adjustment of receiver gain before receiving the remaining part of the Bluetooth packet 200. The control header includes information in multiple fields, and its main function is to inform the receiving end which modulation and coding scheme (MCS) should be used to interpret the subsequent payload, and to perform link layer control and traffic management.

Furthermore, to ensure compatibility with the BT SIG HDT specification, the size and field configuration of the preamble and the control header of the Bluetooth packet 200 shown in FIG. 2 comply with the BT SIG HDT specification. The modulation and bandwidth used for the preamble and the control header also conform to the BT SIG HDT specification.

To enable the Bluetooth packet to achieve a higher data rate, the content following the control header in the Bluetooth packet 200 of this embodiment - namely, the training sequence, the PDU header, and the PDU - uses a modulation scheme or bandwidth that is different from those used by the preamble and the control header. Specifically, the training sequence, the PDU header, and the PDU use higher bandwidth or a modulation scheme with higher data-rate.

For example, the preamble and the control header may use 16-QAM modulation, but the training sequence, the PDU header, and the PDU use 64-QAM modulation. Alternatively, the preamble and the control header may use a 2 MHz bandwidth for wireless transmission, but the training sequence and the PDU header use a 4 MHz bandwidth for wireless transmission. In another example, the preamble and the control header use a single carrier for low-bandwidth transmission, but the training sequence, the PDU header, and the PDU use multi-carrier OFDM (Orthogonal Frequency-Division Multiplexing) for high-bandwidth transmission.

To allow the receiving end (i.e., speaker 102) to identify the modulation scheme and bandwidth used by the training sequence, the PDU header, and the PDU of the Bluetooth packet 200, the control header further includes modulation/bandwidth information. Specifically, in the current BT SIG HDT specification, the control header includes a reference index (RI) field, which is 3 bits long, used to indicate the MCS index for the subsequent payload. Since the current BT SIG HDT specification only defines five modes (Mode 1 to Mode 5), this embodiment utilizes two currently undefined modes within the RI field (i.e., the sixth mode and the seventh mode) to indicate the modulation/bandwidth information for the training sequence, the PDU header, and the PDU, thereby supporting a higher data rate.

For example, if the subsequent training sequence, PDU header, and PDU are configured to use a high bandwidth, the RI field indicates the sixth mode. If the subsequent training sequence, PDU header, and PDU are configured to use an OFDM mode for transmission, the RI field indicates the seventh mode.

Since the modulation/bandwidth used for the training sequence, the PDU header, and the PDU is different from that used for the preamble and the control header, the purpose of configuring the training sequence in the Bluetooth packet 200 is to perform signal synchronization, serve as preparation for subsequent signal demodulation, and use the parameters obtained during the training process for the demodulation of the later PDU header and PDU.

Furthermore, because the Bluetooth packet 200 uses two different modulations/bandwidths, the Bluetooth packet 200 is configured with the GI to provide a stable buffer and transition time. The function of the GI is to ensure that the high-speed data transmission of the subsequent training sequence, PDU header, and PDU can be successfully synchronized and demodulated, preventing the receiving end (i.e., speaker 102) from using inappropriate parameters during the training process. The aforementioned GI means that the wireless communication circuit 120 does not transmit any signal, i.e., the wireless communication circuit 120 does not transmit any valid signal or dummy data during the GI.

In another embodiment, to dynamically balance performance and latency requirements in different environments, the wireless communication circuit 120 can dynamically adjust the length (which is a time duration) of the GI and/or the training sequence.

In one embodiment, the wireless communication circuit 120 can write the length information of the GI and/or the training sequence into the control header to indicate the length of the GI and the training sequence located after the control header in the Bluetooth packet 200. For example, the BT SIG HDT specification's control header has a RFU (Reserved for Future Use) field, which is reserved for future specification extensions or specific applications. Thus, the wireless communication circuit 120 can use the RFU field to indicate different lengths for the GI and/or the training sequence. For instance, the RFU field can indicate a low latency mode, which corresponds to a shorter training sequence and/or a shorter GI. Alternatively, the RFU field can indicate a high performance mode, which corresponds to a longer training sequence and/or a longer GI.

In one embodiment, the wireless communication circuit 120 may determine the length of the GI and/or the training sequence based on system-level information from the processor 110, feedback information from the receiving end (speaker 102), and/or detected signal quality information.

In a first example, the wireless communication circuit 120 can obtain signal quality information, such as RSSI (Received Signal Strength Indication), PER (packet error rate), etc., by actively detecting or receiving feedback from the receiving end. If the obtained signal quality information is poor, the length of the training sequence may be increased, or the lengths of both the GI and the training sequence may be increased. If the obtained signal quality information is good, the length of the training sequence may be maintained or reduced.

In a second example, if the processor 110 indicates that the electronic device 100 is currently being used for a gaming application, the wireless communication circuit 120 determines that a low latency mode should be used, corresponding to a shorter training sequence and/or a shorter GI.

In a third example, if the wireless communication circuit 120 uses multiple antennas to simultaneously transmit and receive signals (i.e., using Multiple-Input Multiple-Output (MIMO)), the wireless communication circuit 120 determines that a high performance mode should be used, corresponding to a longer training sequence and/or a longer GI.

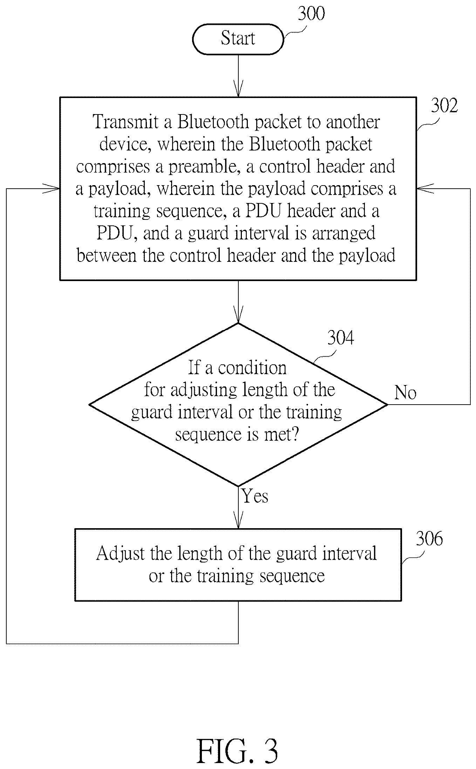

FIG. 3 is a flowchart of a wireless communication method of the electronic device 100 according to one embodiment of the present invention. Referring to the embodiments described above, the wireless communication method is described as follows.

Step 300: the flow starts, where the electronic device has established a Bluetooth link with another device.

Step 302: transmit a Bluetooth packet to another device, wherein the Bluetooth packet comprises a preamble, a control header and a payload, wherein the payload comprises a training sequence, a PDU header and a PDU, and a guard interval is arranged between the control header and the payload.

Step 304: determine if a condition for adjusting length of the guard interval or the training sequence is met, proceed to Step 306; if not, return to Step 302 to use the previous setting to transmit a next Bluetooth packet.

Step 306; adjust the length of the guard interval or the training sequence, and return to Step 302 to use the new setting to transmit a next Bluetooth packet.

Briefly summarized, by using the Bluetooth packet format of the embodiments, the electronic device can transmit the Bluetooth packet with higher data rate. In addition, by using the GI and training sequence length adjustment mechanism, the Bluetooth packet is capable of supporting a high data rate while ensuring a reliable link quality.

## Claims

1. A wireless communication method of an electronic device (100), comprising:
establishing a link with another device (102); and
transmitting a Bluetooth packet to the another device (102), wherein the Bluetooth packet comprises a preamble, a control header and a payload, and a bandwidth used for transmitting the preamble and the control header is different from a bandwidth used for transmitting the payload.

2. The wireless communication method of claim 1, wherein the bandwidth used for transmitting the preamble and the control header is lower than the bandwidth used for transmitting the payload.

3. The wireless communication method of claim 1, wherein the preamble and the control header are transmitted by using a single carrier, and the payload is transmitted using multi-carrier Orthogonal Frequency-Division Multiplexing (OFDM) mode.

4. The wireless communication method of any one of claims 1-3, wherein the payload comprises a training sequence, a Protocol Data Unit (PDU) header and a PDU.

5. The wireless communication method of claim 4, wherein a guard interval is arranged between the control header and the training sequence.

6. The wireless communication method of claim 5, wherein the control header comprises bandwidth information for the training sequence, the PDU header and the PDU.

7. The wireless communication method of claim 5, wherein the control header comprises length information of the guard interval and/or the training sequence to indicate a length of the guard interval and/or a length of the training sequence.

8. The wireless communication method of claim 7, further comprising:
determining the length of the guard interval or the length of the training sequence according to the system-level information of the electronic device, feedback information from the another device, and/or detected signal quality information.

9. The wireless communication method of claim 8, wherein the step of determining the length of the guard interval or the length of the training sequence comprises:
if a low-latency mode is determined according to the system-level information of the electronic device, the feedback information from the another device, and/or the detected signal quality information, determining the guard interval or the training sequence to have a first length; and
if a high performance mode is determined according to the system-level information of the electronic device, the feedback information from the another device, and/or the detected signal quality information, determining the guard interval or the training sequence to have a second length longer than the first length.

10. An electronic device (100), comprising:
a processor (110); and
a wireless communication circuit (120);
wherein the wireless communication circuit (120) is configured to:
establish a link with another device (102); and
transmit a Bluetooth packet to the another device (102), wherein the Bluetooth packet comprises a preamble, a control header and a payload, and a bandwidth used for transmitting the preamble and the control header is different from a bandwidth used for transmitting the payload.

11. The electronic device (100) of claim 10, wherein the bandwidth used for transmitting the preamble and the control header is lower than the bandwidth used for transmitting the payload.

12. The electronic device (100) of claim 10, wherein the preamble and the control header are transmitted by using a single carrier, and the payload is transmitted using multi-carrier Orthogonal Frequency-Division Multiplexing (OFDM) mode.

13. The electronic device (100) of any one of claims 10-12, wherein the payload comprises a training sequence, a Protocol Data Unit (PDU) header and a PDU.

14. The electronic device (100) of claim 13, wherein a guard interval is arranged between the control header and the training sequence.

15. The electronic device (100) of claim 14, wherein the control header comprises bandwidth information for the training sequence, the PDU header and the PDU.
